(19) Europäisches Patentamt
European Patent Office
Office européen des brevets

(11) EP 2 711 369 A1

(12) EUROPEAN PATENT APPLICATION

(43) Date of publication:
**26.03.2014 Bulletin 2014/13**

(51) Int Cl.:
***C07F 9/10*** *(2006.01)* ***A61K 9/127*** *(2006.01)*

(21) Application number: **12006604.8**

(22) Date of filing: **20.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bernina Plus GmbH**
**82152 Martinsried (DE)**

(72) Inventors:
- **Gropp, Felix**
  **81375 München (DE)**
- **Hartmann, Klaus**
  **69118 Heidelberg (DE)**
- **Tewes, Bernhard**
  **79279 Vörstetten (DE)**
- **Richardsen, Holger**
  **85609 Aschheim (DE)**

(74) Representative: **Grünecker, Kinkeldey, Stockmair & Schwanhäusser**
**Leopoldstrasse 4**
**80802 München (DE)**

# (54) Liposomes containing tetraether lipid derivatives

(57) The present invention relates to liposomes comprising a tetraether lipid of formula (1) or a salt thereof and at least one sterol, wherein the molar ratio of tetraether lipid to sterol is from 1 : 1 to 1 : 10.

EP 2 711 369 A1

## Description

The present invention relates to tetraether lipid derivates containing liposomes and their use.

Liposomes are uni- or multilamellar artificial lipid vesicles enclosing an aqueous interior. Compounds, which may be contained in the aqueous interior of the liposome are largely protected from proteolytic or nucleolytic attacks. The lipid vesicles are generally similar to biological membranes and are therefore after attachment to the same often easily integrated in the membrane structure. In this membrane fusion, the content of the interior of the liposomes is discharged into the lumen enclosed by the biological membrane. Alternatively, the liposomes are degraded in lysosomes of the cells after endocytic uptake. The content of the liposome's interior released into the lysosom can then enter from there into the cytosol of the cell.

Liposomes can therefore be used as transport vehicles. Besides their use as agent for lipofection, i.e. as a vehicle for the transport of nucleic acids, liposomes are often used as a delivery vehicle for therapeutic agents. For those functions known under the heading "drug delivery", hydrophilic drugs, such as "small molecules", peptides or proteins can be incorporated into the aqueous interior of the liposome and / or hydrophobic compounds into the hydrophobic matrix, i.e. the lipid layer of liposomes. Thus, for example, the cosmetics industry produces liposome-containing skin creams, which transport the active agents into the epidermis and in deeper cell layers. A targeted delivery of the active agents transported by the liposomes to specific cells or their accumulation in the vicinity of such target cells can be achieved in this context, for example, by antibodies to specific cell surface structures, which are coupled to the outer membrane of the liposome or to other "targeting" units.

For the preparation of liposomes mainly natural lecithins from soybeans, egg yolk or defined natural or artificial phospholipids, such as cardiolipin, sphingomyelin, lysolecithin and others may be used. By varying the polar head groups (choline, ethanolamine, serine, glycerol, inositol), the length and degree of saturation of the hydrocarbon chains size, stability and absorption and release ability of the associated molecules can be influenced.

One of the major disadvantages of conventional liposomes as efficient drug-carriers is their low stability in the various biological environments of the body. Stability is mostly affected bio-chemically (e.g. oxidation; (de-)protonation; hydrolysis); or physico-structurally (hydration; ion-incorporation; phase-transitions by temperatures, salinity, pH). Liposomes formed from normal bilayer-forming phospholipids are stable only for a short period of time, even in a refrigerated state. Their storage stability can be increased, e.g. by addition of phosphatidic acid or $\alpha$-tocopherol, however, the thus improved stability is still insufficient for many purposes. In addition, conventional liposomes are not stable in acids and are therefore neither suitable to transport pharmaceutical agents which pass through the stomach after oral administration, nor for liposome-enhanced DNA transfection under slightly acidic pH conditions. Moreover, those conventional liposomes are not resistant to digestion in the small intestine and are therefore not suitable for transporting active agents through the small intestine.

For scientific and medical lipofections in mammalian cells liposome-forming lipid mixtures, such as Lipofectamine®, Lipofectin® or DOTAP®, are frequently used. In addition to the above-mentioned disadvantages, with their use the need to accurately determine a plurality of parameters (e.g. cell density, amount of nucleic acid, the proportion of added lipids, the volume of the liposome approach, etc.) is required, since the optimum parameter ranges at which sufficient transfection efficiencies can be achieved are only very narrow. The transfections using commercial lipofection reagents are very complicated and costly. In addition, in the above products large variations between batches can be observed, which make them unreliable in practice.

Another group of liposome-forming compounds are tetraether lipids. In addition to tetraether lipids from natural sources, alternative, synthetic derivatives can be used, such as the compounds described in WO-A-99/10337, WO-A-02/053554, and WO-A-03/064360. In general, those compounds show a satisfactory applicability for the formation of liposomes. However, not all of the tetraether lipid derivatives are suitable for forming liposomes. Furthermore, the formed liposomes themselves do not all contain the desired properties.

WO-A-97/31927 (DE-A-19607722) describes a tetraether lipid derivative comprising a side chain with a modified or unmodified glucose moiety or an oxidation product of such glucose, and liposomes containing such a tetraether lipid derivative, which are characterized by improved resistance with respect to acids and by improved storage stability.

US-A-5,098,588 describes the preparation of tetraether lipid derivatives with polar side chains and their use as boundary lubricant.

WO-A-99/10337 (DE-A-19736592) is directed to tetraether lipid derivatives having a positive charge due to the formation of quaternary ammonium salts per se or under physiological conditions. Such derivatized lipids are suitable to interact with negatively charged molecules such as nucleic acid molecules, and to include the negatively charged molecules, for example, in liposomes.

WO-A-02/053554 relates to tetraether lipids and liposomes containing tetraether lipids and their use for the encapsulation of active agents.

WO-A-03/064360 is directed to synthetic tetraether lipids and methods of making the tetraether lipids.

WO-A-2004/037223 relates to liposome-forming compositions composed of phospholipids and tetraether lipids.

J. Parmentier et al., International Journal of Pharmaceutics 405 (2011) 210 to 217 describe liposomes of the tetraether lipid glycerylcaldityl tetraether with egg phosphatidylcholine and cholesterol. However, said lipids are instable at pH 2.

However, there is still a need for lipids which allow the generation of liposomes improved in terms of their in vivo stability and storage stability, in particular stability at low pH. Further, there is a need for lipids having an increased stability and an improved ability for the controlled release of active agents from integrating liposomes.

The object of the invention is therefore to provide liposomes having an improved stability and/or allow a controlled drug release.

The problem of the present invention is solved by the liposome according to claim 1. Furthermore, the present invention provides pharmaceutical compositions comprising the liposome, the liposome for use as a medicament, and the use of the liposome for the encapsulation of an active agent. Preferred embodiments are set forth in the subclaims.

**Description of the figures**

Figure 1: Synthesis of STEL-PC

Figure 2: Release of carboxy fluorescein after 30 minutes in dependance of the content of STEL-PC in cholesterol liposomes.

Figure 3: Relative encapsulation efficiency of DDVAP in dependance of the CDCA content in STEL-PC - cholesterol (1 : 2.5) liposomes at pH 7.

Figure 4: Relative encapsulation efficiency of DDVAP in dependance of the CDCA content in STEL-PC - cholesterol (1 : 2.5) liposomes at pH 4.9.

Figure 5: Relative encapsulation efficiency of DDVAP in dependance of the rehydration volume of STEL-PC - cholesterol - CDCA (1 : 2.5 : 0.25) liposomes at pH 4.9.

Figure 6: Release of DDVAP in dependance of the incubation time of STEL-PC - cholesterol - CDCA (1 : 2.5 : 0.25) liposomes at pH 2.

Figure 7: Release of SCP in dependance of CDCA content of STEL-PC - cholesterol (1 : 2.5) liposomes at pH 8 in the presence of 0.3 wt.-% bile salt.

Figure 8: Release of SCP in dependance of incubation time of STEL-PC - cholesterol (1 : 2.5) liposomes with a CDCA content of 0, 6.7, 12.5 and 22.2 mol% at pH 8 in the presence of 0.3 wt.-% bile salt.

Figure 9: Cumulative urine volume after oral application of DDVAP 10 μg/kg in Brattleboro rats.

Figure 10: Free dose equivalent after oral application of DDVAP 10 μg/kg in Brattleboro rats.

**Detailed description of the invention**

The liposome in accordance with the present invention comprises two essential compounds. As the first essential compound the liposome comprises a tetraether lipid of formula (1) or a salt thereof:

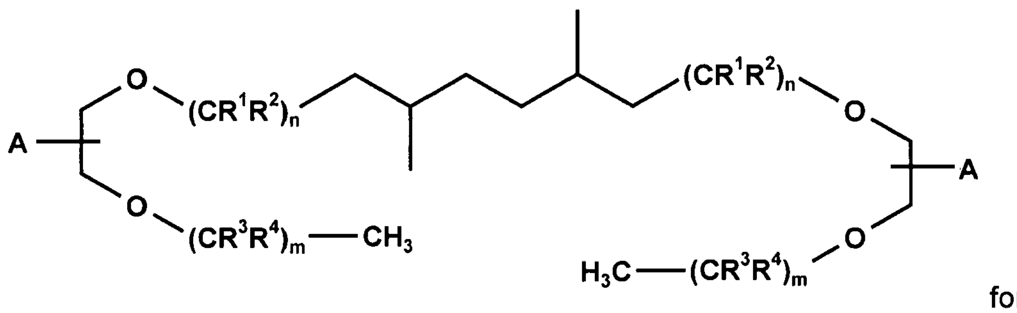

formula (1)

wherein n is an integer of from 11 to 15; m is an integer of from 13 to 17; $R^1$, $R^2$, $R^3$ and $R^4$ are independently selected from H or methyl; and

A is

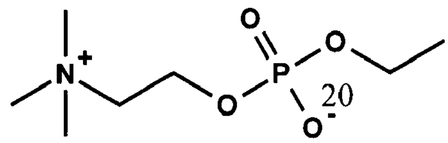

In a preferred embodiment in combination with any of the above or below mentioned embodiments, in the tetraether lipid of formula (1) n is from 12 to 14, more preferably 13.

In another preferred embodiment in combination with any of the above or below mentioned embodiments, in the tetraether lipid of formula (1) m is from 14 to 16, more preferably 15.

In a further preferred embodiment in combination with any of the above or below mentioned embodiments, $R^1$, $R^2$, $R^3$ and $R^4$ are all H. In particular, the tetraether lipid has the following formula (2):

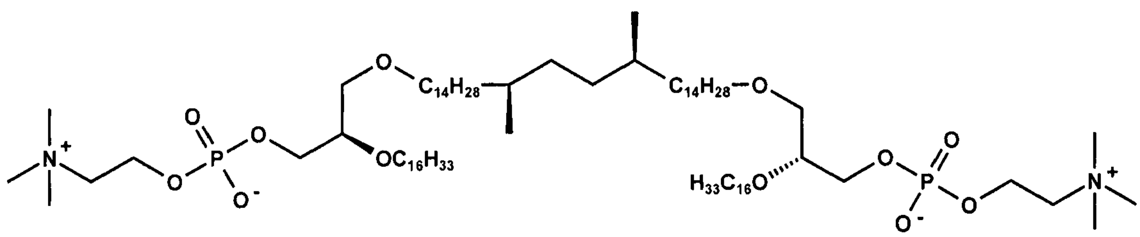

formula (2)

The alkyl groups $C_{16}H_{33}$ and the alkylene moieties $C_{14}H_{28}$ represent n-alkyl and n-alkylene groups, respectively.

In an alternative embodiment each A can be independently selected from the following formula:

$$-J-(X^1)_r-K-(X^2)_q-Y$$

in which:

J is $-CONR^1-$, $-COO-$, $-CH_2O-$, $-CH_2OCO-$, $-CH_2OCOO-$, $-CH_2NR^1CO-$, $-CH_2OCONR^1-$, $-CH_2NR^1COO-$, $-CON[(CH_2)_mY]-$, $-CH_2OCO(CH_2)_mO-$, $-CONH(CH_2)_mNHCO(CH_2)_mO-$, $-CH_2COO-$, $-CH_2O(PO_2R^1)O-$ or $-CH_2S-$;

$X^1$ and $X^2$ are independently a branched or an unbranched alkylene or alkenylen chain having 1 to 20 carbon atoms, $-COCR^1Y(CH_2)_m-$, $-(CH_2)_mNHCO-$, $-(CH_2)_mNHCOCHY-$, $-(CH_2)_mO(CH_2)_mNHCOCHY-$, $-[(CH_2)_mO]_n-$, $-[(CH_2)_mO]_nCO-$, $-(CH_2)_mNHCO(CH_2)_mCO-$, $-(CH_2)_m-$, $-(CH_2)_mCO-$, $-(CH_2)_mNH-$ or $-(CH_2)_mNHCO(CH_2)_m-$;

K is $-[(CH_2)_mO]_n-$, $-[O(CH_2)_m]_n-$, $-[NR^1COCHN(R^1)_2]_o-$ or $-(NR^6)_p-$;

Y is $-H$, $-R^2$, $-NR^2R^3$, $-N^+RR^3R^4$, $-N[(CH_2)MY]_2$, $-NR^2(CH_2)_mY$, $-OR^5$, $-COR^7$, $-NHC(NH)NH_2$, $-NHCOY$ or $-SR^8$,

wherein each Y within one group may be different;

$R^1$ and $R^6$ are -H, a straight chain, branched or cyclic alkyl, alkenyl, aralkyl or aryl group having 1 to 12 carbon atoms, wherein these groups may be substituted with at least one group Y or $-(CH_2)_mNHR^2$;

$R^2$ to $R^5$, $R^7$ and $R^8$ are independently $R^1$ or $-(C{=}N^+H_2)NH_2$;

m is 1 to 5, wherein m may be different within one group n is 0 to 150; o is 0 to 10; p is 0 or 1; q is 0 to 5; and r is 0 or 1,

wherein each one of $R^2$ to $R^5$, $R^7$ and $R^8$ may further comprise a ligand that may be bonded via a spacer to the lipid, as well as by formation of pentacycles in the tetraether lipid moiety, and salts of these compounds.

According to the invention, the presence of at least one tetraether lipid of formula (1) is mandatory. However, mixtures of different tetraether lipids, of which at least one is a tetraether lipid of formula (1), can also be present in the liposomes. Preferred further tetraether lipids are in particular those disclosed in WO-A-99/10337, WO-A-02/053554, and WO-A-03/064360.

In a preferred embodiment in combination with any one of the above or below mentioned embodiments, the liposome according to the present invention contains 1 to 3 different tetraether lipids of formula (1), more preferably 1 or 2, in particular 1.

In a further preferred embodiment in combination with any one of the above or below mentioned embodiments, the liposome contains the tetraether lipid of formula (2) and one other tetraether lipid of formula (1).

In another preferred embodiment in combination with any one of the above or below mentioned embodiments, the liposome according to the present invention contains one tetraether lipid of formula (1) and 1 or 2 tetraether lipids different from formula (1). More preferably, the liposome contains the tetraether lipid of formula (2) and one other tetraether lipid different from formula (1).

As the second essential compound, the liposome contains at least one sterol.

In a preferred embodiment in combination with any of the above or below mentioned embodiments, the sterol is a derivative of cholesterol, more preferably cholesterol.

The sterol for the liposome is able to be incorporated in a lipid bi-layer. According to the present invention at least one sterol must be present. It is, however, possible that two or more sterols are present.

In another embodiment in combination with any of the above or below mentioned embodiments in addition to the sterol a further lipid is present. The lipid can be any lipid, which is able to form a bi-layer. Such lipids are known to the person skilled in the art and include the lipids mentioned in WO-A-2004/037223.

In the liposome in accordance with the present invention, the molar ratio of tetraether lipid to sterol is from 1 : 1 to 1 : 10. The amount of tetraether lipid is 10 to 50 mol%, based on the total composition. If the ratio is in this range, the liposome is stable, even at low pH.

In a preferred embodiment in combination with any one of the above or below mentioned embodiments, the molar ratio of tetraether lipid to sterol is from 1 : 2 to 1 : 4, more preferably from 1 : 2 to 1 : 3, in particular the molar ratio is 1 : 2.5. Preferably, the amount of tetraether lipid is 20 to 33 mol%, more preferably 28 to 29 mol%, based on the total composition.

In a preferred embodiment in combination with any one of the above or below mentioned embodiments, the liposome comprises an active agent.

In a further preferred embodiment in combination with any one of the above or below mentioned embodiments, the active agent is selected from the group of peptides, more preferably small cyclic peptides. Preferably, the peptides have a molecular weight of from 200 to 100000 g/mol (Daltons), such as parathyroid hormone (PTH), calcitonin, e.g. salmon calcitonin, GCSF, octreotide, human growth hormone (hGH), interleukine 4 and insulin. In particular, the active agent is octreotide, calcitonin, parathyroid hormone and somatropin, especially 1-desamino-8-D-arginine vasopressin.

In a further preferred embodiment in combination with any one of the above or below mentioned embodiments, the liposome further comprises a penetration enhancer. A penetration enhancer is a compound, which affects the tissue to be penetrated by the drug in a way that transport rates are increased significantly. This may be due to altered permeability coefficients, or increased partition coefficients of drug in tissue, or loosened protein conjunctions intercellularly; there are three categories to be differenciated individually; chemical; physical or bio-chemical. In particular, the penetration enhancer refers to a liposome component which is capable of increasing the delivery of a pharmaceutically active compound across a layer of cells or to the interior of a target cell. The terms "permeation enhancer", "cell permeation enhancer", "bioenhancer" and "adsorption promoter" may be used synonymously.

More preferably, the penetration enhancer is selected from the group of bile acid derivatives, free fatty acids, or a synthetic detergent. In particular, the penetration enhancer is chenodeoxycholic acid, oleic acid, polyoxyethylene(20)sorbitan monooleate (Tween 80®), sorbitan monooleate (Span 80®), 2-(2-ethoxyethoxy)ethanol (Transcutol®),

or caprylocaproyl macrogol-8 glyceride(Labrasol®). Further preferred penetration enhancers are oxazolidinones, urea, pyrrolidones, fatty acids, cholates (bile salts), essential oils, terpenes and terpenoids, sulphoxides and similar chemicals (DMSO), azones and various other chemicals described in literature of transdermal drug delivery and intra-testinal drug delivery.

Depending on the biological environment in the body, a compound of this invention may fullfill various and different roles in drug delivery such as protecting a drug from pH-attack in the stomach, and, in addition, enhancing tissue penetration and drug-release in the intestine.

In a further preferred embodiment in combination with any one of the above or below mentioned embodiments, the molar ratio of penetration enhancer to the liposome forming lipid (tetraether lipid and sterol and other optional lipids) is from 0.05: 1 to 0.35 : 1, more preferably from 0.2 : 1 to 0.3 : 1, in particular 0.25 : 1. Preferably, the amount of penetration enhancer is from 5 to 26 mol%, more preferably from 17 to 23 mol%, in particular 23 mol%, based on the total composition.

In a further preferred embodiment in combination with any one of the above or below mentioned embodiments, the liposome comprises the tetraether lipid of formula (2), cholesterol and chenodeoxycholic acid, wherein the molar ratio of tetraether lipid : cholesterol is 1 : 2.5 and the molar ratio of the [tetraether lipid of formula (2) and cholesterol] : chenodeoxycholic acid is 1 : 0.25. This results in an overall molar ratio of tetraether lipid : cholesterol : chenodeoxycholic acid of 1 : 2.5 : 1.

A liposome in accordance with the present invention is very stable at low pH and therefore allows the intestinal delivery of active agents with liposomes which are not already released at low pH of the stomach. Moreover, under the physiological conditions of the GI-tract the active agent is released easily.

The liposome of the present invention, in a preferred embodiment in combination with any one of the above or below mentioned embodiments may in addition to the above described components further contain additional ingredients.

The liposome of the present invention may comprise a preservative, preferably a microbiocide. The preservative is preferably selected from short chain alcohols, such as ethyl alcohol and isopropyl alcohol, chlorobutanol, benzyl alcohol, chlorobenzyl alcohol, dichlorobenzyl alcohol, hexachlorophene, phenolic compounds, such as cresol, 4-chloro-m-cresol, p-chloro-m-xylenol, dichlorophene, hexachlorophene, povidon iodide, parabens, especially alkyl parabens, such as methyl paraben, ethyl paraben, propyl paraben or butyl paraben, benzylparaben, acids, such as sorbic acid, benzoic acid and its salts, quarternary ammonium compounds, such as alkonium salts, e.g. bromides, benzalkonium salts, such as a chloride or a bromide, cetrimonium salts, such as a bromide, phenoalkezinium salts like a phenododecinium bromide, cetylpyridinium chloride and other salts, mercury compounds, such as phenylmercuric acetate, phenylmercuric borate, or phenylmercuric nitrate, thiomersal, chlorhexidine or its gluconate, or any antibiotically active compound of biological origin or any mixture thereof.

This compound is preferably added in an amount such that it reduces the amount of bacteria in accordance with the following: after addition of 1,000,000 microorganisms per one gram of the total composition the amount of aerobic bacteria is reduced to less than 100 after four 4 days, or in the case of enterobacteria the amount is reduced to less than 10 after 4 days, and in the case of *Pseudomonas aeruginosa* or *Staphylococcus aureus* to less than 1 after 4 days. Preferably, the compound is added in an amount such that the reduction is reached after 3 days, most preferably after one day.

In terms of individual compounds, the quantities set out below are generally suitable for achieving such a reduction.

Short-chain alcohols, preferably ethyl alcohol, propyl alcohol, butyl alcohol or benzyl alcohol: presence of up to 10 wt.-%, more preferably up to 5 wt.-% and most preferably in the range of between 0.5 and 3 wt.-%, based on the total composition is preferred, wherein for chlorobutanol, a range of 0.3 to 0.6 wt.-%, based on the total composition, is particularly preferred.

Parabens, especially methyl paraben: presence of 0.05 to 0.2 wt.-%, based on the total composition, and propyl paraben: presence of 0.002 to 0.02 wt.-%, based on the total composition, are preferred.

Sorbic acid: presence of 0.05 to 0.2 wt.-%, based on the total composition; benzoic acid: presence of 0.1 to 0.5 wt.-%, based on the total composition; phenols, trichlosan: presence of 0.1 to 0.3 wt.-%, based on the total composition; chlorohexidine: presence of 0.01 to 0.05 wt.-%, based on the total composition, are also preferred.

A further additional component of the liposome according to the present invention may be at least one antioxidant. Any antioxidant which is compatible with the essential components of the liposome can be used. The antioxidant is preferably used in an amount which reduces the oxidation index to less than 100% per 6 months, preferably, the reduction of oxidation index to less than 100% per 12 months and particularly preferably reduced to less than 50% per 12 months.

The antioxidant may be selected from the following groups:

Synthetic phenolic antioxidants such as butylated hydroxyanisole (BHA), butylated hydroxytoluene (BHT) and di-t-butylphenol (LY178002, LY256548, HWA-131, BF-389, CE-986, PD-127443, E-5119, BI -L-239XX), tertiary butylhydroquinone (TBHQ), propyl gallate (PG), 1-O-hexyl-2,3,5-trimethylhydroquinone (HTHQ); aromatic amines, such as diphenylamine, p-alkylthio-o-anisidine, ethylenediamine derivates, carbazole, and tetrahydroindenoindol; phenols

and phenolic acids, such as guaiacol, hydroquinone, vanillin, gallic acid and its esters, protocatechuic acid, quinic acid, syringic acid, ellagic acid, salicylic acid, nordihydroguaiaretic acid (NDGA), eugenol; tocopherols, including alpha-, beta-, gamma-, delta-tocopherol and their derivatives, such as tocopheryl acylate, e.g. acetate, laurate, myristate, palmitate, oleate, linoleate, etc. or any other suitable tocopheryl lipoate, tocopheryl-POE-succinate; 6-hydroxy-2,5,7,8-tetramethylchroman-2-carboxylic acid (Trolox®) and corresponding amide compounds and thiocarboxamide analogs; ascorbic acid and its salts, iso-ascorbate, (2 or 3 or 6)-o-alkylascorbic acids, ascorbic esters, e.g. 6-o-lauroyl, myristoyl, palmitoyl, oleyl or linoleoyl-L-ascorbic acid esters; non-steroidal antiinflammatory agents (NSAIDs) such as indomethacin, diclofenac, mefenamic acid, flufenamic acid, phenylbutazone, oxyphenbutazone, acetylsalicylic acid, naproxen, diflunisal, ibuprofen, ketoprofen, piroxicam, penicillamine, Penicillamine disulphide, primaquine, quinacrine, chloroquine, hydroxychloroquine, azathioprine, phenobarbital, acetaminophen; aminosalicylic acids and derivatives; methotrexate, probucol, antiarrythmic agents, such as amiodarone, apridine, asocainol; ambroxol, tamoxifene, b-hydroxytamoxyfen; calcium antagonists, such as nifedipine, nisoldipine, nimodipine, nicardipine, nilvadipine; beta receptor blockers, such as atenolol, propranolol, nepivolol; sodium bisulfite, sodium metabilsulfite, thiourea; chelating agents, such as EDTA, GDTA, desferral; different endogenous defense systems, such as transferrin, lactoferrin, ferritin, ceruloplasmin, haptoglobin, hemopexin, albumin, glucose, ubiquinol-10; enzymatic antioxidants, such as superoxidismutase and metal complexes with a similar activity, including catalase, glutathione peroxidase, and less complex molecules, such as beta-carotene, bilirubin, uric acid, flavonoids (flavones, flavonols, flavonones, flavanonals, chalcones, anthocyanins), N-acetylcysteine, mesna, glutathione, thiohistidine derivatives, triazoles; tannins, cinnamic acid, hydoxycinnamic acid and esters thereof, such as coumaric acid and esters, caffeic acid and esters, ferulic acid, (iso-)-chlorogenic acid, sinapic acid; spice extracts, e.g. from clove, cinnamon, sage, rosemary, mace, oregano, allspice, nutmeg; carnosic acid, carnosol, caprylic acid, rosmarinic acid, rosmary diphenol, gentisic acid, ferulic acid; oat flour extracts, such as avenathramide 1 and 2, thioethers, dithioethers, sulfoxides, tetraalkyl thiuram disulfide; phytic acid, steroid derivatives, e.g. U74006F; tryptophan metabolites, such as 3-hydroxykynurenine, 3-hydroxyanthranilic acid; and organochalcogenides.

Although the amount of antioxidant depends on the particular formulations of the liposome of the present invention, for some of the preferred antioxidants general amounts are specified, in which the desired microbial reduction can be obtained. This concentration is for BHA or BHT 0.001 to 2 wt.-%, more preferably 0.025 to 0.2 wt.-% and most preferably between 0.005 and 0.02 weight.-%, each based on the total composition; for TBHQ and PG from 0.01 to 2 wt.-%, more preferably between 0.005 and 0.2 wt.-% and most preferably between 0.01 and 0.02 wt.-%; for tocopherols 0.005 to 5 wt.-%, more preferably between 0.01 and 0.5 wt.-% and most preferably between 0.05 and 0.075 wt.-%, for ascorbic acid esters from 0.001 to 5 wt.-%, more preferably between 0.005 and 0.5 wt.-% and most preferably between 0.01 and 0.15 wt.-%, for ascorbic acid from 0.001 to 5 wt.-%, more preferably between 0.005 and 0.5 wt.-%, and most preferably between 0.01 and 0.1 wt.-%, for sodium bisulfite or sodium metabisulfite 0.001 to 5 wt.-%, more preferably between 0.005 and 0.5 wt.-% and most preferably between 0.01 and 0.15 wt.-%, for thiourea 0.0001 to 2 wt.-%, more preferably between 0.0005 and 0.2 wt.-% and most preferably between 0.001 and 0.01 wt.-%, typically 0,005 wt.-%, for cysteine from 0.01 to 5 wt.-%, more preferably between 0.05 and 2 wt.-% and most preferably between 0.1 and 1.0 wt.-%, typically 0.5 wt.-%, for monothioglycerol 0.01 to 5 wt.-%, more preferably between 0.05 and 2 wt.-% and most preferably between 0.1 and 1.0 wt.-% , typically 0.5 wt.-%, for NDGA 0.0005 to 2 wt.-%, more preferably between 0.001 and 0.2 wt.-% and most preferably between 0.005 and 0.002 wt.-%, typically 0.01 wt.-%, for glutathione 0.005 to 5 wt.-%, more preferably between 0.01 and 0.5 wt.-% and most preferably between 0.05 and 0.2 wt.-%, typically 0.1 wt.-%, for EDTA 0.001 to 5 wt.-%, more preferably between 0.005 and 0.5 wt.-% and most preferably between 0.01 and 0.2 wt.-%, typically between 0.05 and 0.075 wt.-%, for citric acid from 0.001 to 5 wt.-%, more preferably between 0.005 and 3 wt.-% and most preferably between 0.01 and 0.2 wt.-%, typically between 0.3 and 2 wt.-%, each based on the total composition.

Another optional component of the liposome of the invention is a consistency regulating agent. A consistency regulating agent is a compound that can effect the swelling rate of the inventive liposome. Preferably in the liposome according to the invention consistency regulating agent are used which increase the swelling rate from the dry state to the state of the complete solvation at least by a factor of 10.

Such consistency regulating agents are known in the art and include, in particular pharmaceutically acceptable hydrophilic polymers, such as partially etherified derivatives of cellulose, including carboxymethylcellulose, hydoxyethylcellulose, hydoxypropylcellulose, hydoxypropylmethylcellulose, hydoxymethylcellulose or methyl cellulose, completely synthetic hydrophilic polymers, including polyacrylate, polymethacrylate, polyhydroxyethylmethacrylate, polyhydroxypropylmethacrylate, polyacrylonitrile, methallyl sulfonate, polyethylene, polyoxyethylene, polyethyleneglycol, polyethylenglycollactide, polyethylene glycol, polyvinylpyrrolidone, polyvinyl alcohol, polypropylmethacrylamide, polypropylene fumarat-co-ethylenglycol, polyoxamers, polyaspartamide, hydrazine crosslinked hyaluronic acid, silicone, natural rubber, including alginates, carrageenan, guar gum, gelatin, tragacanth, pectin, xanthan, chitosan, collagen, agarose, mixtures thereof and derivatives or copolymers thereof.

The consistency regulating agent may be used individually or in mixture and is preferably used in an amount of from 0.05 to 10 wt.-%, based on the total composition, more preferably from 0.1 to 5 wt.-%, more preferably from 0.25 to 3.5 wt.-% and most preferably in the range of 0.5 to 2 wt.-%.

In addition to the above-mentioned other optional components, the liposome of the present invention may contain additional additives, such as cryoprotectants, anti-caking agents, swelling agents, stabilizers, and dyes as long as these substances do not disadvantageously interfere with the liposome of the invention.

The tetraether lipid present in the liposomes in accordance with the present invention may be synthesized according to the methods described in WO 03/064360. In particular, the tetraether lipd of formula (2) is synthesized as shown in Figure 1.

Methods for the formation of liposomes are known to the person skilled in the art. Generally the lipids used for the preparation of the liposome are first dissolved in an organic solvent and a lipid film is formed by evaporation. The lipid film is thoroughly dried to remove any residual solvent. Subsequently, the lipids of this film are resuspended in a suitable buffer system. For pharmaceutical purposes the buffer system is e.g. physiological saline, pH 7.4, but other buffer systems (eg, McIlvaine buffer), or unbuffered solutions, such as unbuffered potassium chloride or sodium chloride solutions, can also be used.

Shaking by hand first, large multilamellar vesicles are formed with a size distribution in the micron range. The formation of these vesicles can be facilitated by using two glass beads and / or an ultrasonic bath with a low sound intensity.

For the preparation of unilamellar liposomes of defined size the following methods for the preparation of liposomes according to the invention are suitable:

(A) sonication: The suspension of multilamellar liposomes is sonicated at 20 kHz for 5 minutes (Branson Sonifer B 15). Liposomes with a diameter of 500 nm are formed.

(B) extrusion through a French pressure cell: The suspension of multilamellar liposomes is extruded four times in the French pressure cell (SLM-Aminco Inc., Urbana, IL, USA) at 16000 psi. Liposomes with a diameter of 120 nm are formed.

(C) extrusion through polycarbonate filters: The suspension of multilamellar liposomes was extruded through polycarbonate filters of defined pore size (LiposoFast, Avestin, Ottawa,

Canada). When filter with a pore size of 100 or 200 nm are used, the size of the resulting liposomes, is slightly above the size distribution of the pore size. The extrusion through filters of such small pore size can also serve as sterile filtration, provided all other requirements for sterile filtration (e.g. exact separation of non-sterile and sterile parts of the filtration apparatus) are observed. In order to facilitate the actual filtration, the following steps can be additionally carried out:

(ca) The suspension of multilamellar liposomes is sonicated at 20 kHz for 1 to 5 minutes (see (a))

(cb) The suspension of multilamellar liposomes is frozen and thawed for 1 to 3 times.

(cc) The suspension of multilamellar liposomes according to (ca) or (cb) is prefiltered through a polycarbonate filter of 600 to 800 nm pore size.

After the sonication or extrusion, the liposomes can be centrifuged in an Eppendorf centrifuge 3200 for 10 minutes, in order to remove non-liposomal material. Intact, closed vesicles remain in the supernatant.

Liposomes can further be formed by detergent solubilization followed by detergent dialysis. In this method a lipid film is first formed as described above. The lipid film is suspended in a detergent-containing buffer system (examples for dialysable detergents are octyl-ß-D-glucopyranoside and octyl-ß-D-thioglucopyranoside). The molar ratio of said detergents (tetraether lipid to detergent) should be from 0.05 to 0.3 and the amount of buffer should be calculated to result in a liposome dispersion with a maximum of 15 to 20 mg lipid per ml buffer. By shaking the mixed micelles of detergent and tetraether lipid are formed.

The suspension of mixed micelles is then transferred, for example in a Lipoprep ®-dialysis cell or in a mini-dialysis cell Lipoprep® (Diachema AG, Langnau, Switzerland) and dialyzed at room temperature for 24 hours. After removal of the detergent by dialysis, the liposomes of about 400 nm in diameter are formed from the mixed micelles.

The liposome preparation can be centrifuged in an Eppendorf centrifuge 3200 for 10 minutes to remove non-liposomale material. Intact, closed vesicles remain in the supernatant.

The liposomes in accordance with the present invention may for example be formed in that the tetraether lipid and the sterol are suspended in a physiologically acceptable buffer, such as a phosphate buffer, a citrate buffer, or an

acetate buffer. The molarity of the buffer is in the range from 10 mM to 1000 mM, the pH is preferably in the range between 2 and 9 and more preferably in the range 3 to 6.

By variation of the method for preparing the liposomes, liposomes of variable size are obtained, such as 60 to 1200 nm, preferably 100 to 1000 nm, more preferably 150 to 250 nm.

The active agents can be introduced into the liposomes during the formation of the liposomes or can be added to the already formed liposome. The amount of active agent that is used in the respective liposome can, of course, vary depending on the desired application. However, it has been found that particularly stable and efficient drug-containing liposomes can be obtained when the ratio between the total molarity of sterol and tetraether lipid to the mass of the active agent is in the range 0.01 to 0.2 μmol/μg, more preferably in the range of 0.03 μmol/μg to 0.15 μmol/μg, and most preferably between 0.05 μmol/μg and 0.1 μmol/μg.

In an embodiment in combination with any one of the above or below mentioned embodiments the present invention relates to a pharmaceutical composition comprising the liposome of the present invention and a pharmaceutically acceptable excipient.

Pharmaceutically acceptable excipients are known to the person skilled in the art and include diluent, such as calcium phosphate (dibasic and/or tribasic), powdered cellulose, dextrates, dextrin, fructose, anhydrous lactose, lactose monohydrate, maltose, mannitol, microcrystalline cellulose, sorbitol, sucrose, starch or mixture thereof; disintegrators, such as agar-agar, algins, calcium carbonate, carboxmethylcellulose, cellulose, clays, colloid silicon dioxide, croscarmellose sodium, crospovidone, gums, magnesium aluminium silicate, methylcellulose, polacrilin potassium, sodium alginate, low substituted hydroxypropylcellulose, and cross-linked polyvinylpyrrolidone hydroxypropylcellulose, sodium starch glycolate, and starch; binders, such as microcrystalline cellulose, hydroxymethyl cellulose, hydroxypropylcellulose, and polyvinylpyrrolidone; fillers, such as calcium carbonate, calcium phosphate, dibasic calcium phosphate, tribasic calcium sulfate, calcium carboxymethylcellulose, cellulose, dextrates, dextrin, dextrose, fructose, lactitol, lactose, magnesium carbonate, magnesium oxide, matitol, maltodextrins, maltose, sorbitol, starch, sucrose, sugar, and xylitol; lubricants such as agar, calcium stearate, ethyl oleate, ethyl laureate, glycerin, glyceryl palmitostearate, hydrogenated vegetable oil, magnesium oxide, magnesium stearate, mannitol, poloxamer, glycols, sodium benzoate, sodium lauryl sulfate, sodium stearyl, sorbitol, stearic acid, talc, and zinc stearate and others known to the person skilled in the art.

The pharmaceutical composition can be applied in each of the application forms familiar to the person skilled in the art for both medical and non-medical use, e.g., as tablets, coated tablets, effervescent tablets, tablets with an acid-resistant coating, capsules, hard gelatin capsules, powders, granulates, sugar-coated tablets, ointments, creams, gels, solutions or sprays. In galenic and other application forms, the composition can be processed with the customary galenic aids, such as tablet bonders, filling agents, preservative agents, tablet-opening agents, flow regulation agents, softening agents, wetting agents, dispersing agents, emulsifying agents, solvents, retarding agents, anti-oxidative agents, consistency regulators, penetration improvers and/or propellant gases.

In an embodiment in combination with any one of the above or below mentioned embodiments the present invention relates to the liposome of the present invention for use as a medicament.

In a further embodiment in combination with any one of the above or below mentioned embodiments the present invention relates to the liposome of the present invention for use in treating nocturia, diabetes insidipus; dwarfism or small stature with partial or complete hGH deficiency, Ulrich Turner Syndrom, chronical renal insufficiency, Prader Willi Syndrom, idiopathic short stature; diabetes, small stature IGF1, severe IGF1 deficiency; osteoporosis; agromegaly, tall stature, gigantism; coagulation factors deficiency, Factor VII, VIII, IX, hemophilic disorders, treatment and prophylaxis of bleeding in patients with haemophilia A (congenital factor VIII deficiency), treatment and prophylaxis of bleeding in patients with haemophilia B (congenital factor IX deficiency), treatment of bleeding episodes in hemophilia A or B patients with inhibitors to Factor VIII or Factor IX and in patients with acquired hemophilia, prevention of bleeding in surgical interventions or invasive procedures in hemophilia A or B patients with inhibitors to Factor VIII or Factor IX and in patients with acquired hemophilia, treatment of bleeding episodes in patients with congenital FVII deficiency, prevention of bleeding in surgical interventions or invasive procedures in patients with congenital FVII deficiency; psoriasis, interleukine variants for chronic inflammatory disorders, e.g. atopic dermatitis, ulcerative colitis, allergies, asthma.

In another embodiment in combination with any one of the above or below mentioned embodiments the present invention relates to the use of the liposome of the present invention for the encapsulation of an active agent.

**Examples**

The present invention is illustrated by the following examples:

<u>Abbreviations and Materials</u>

SCP small cyclic peptide

**Active agent/peptide:**

DDVAP 1-desamino-8-D-arginine vasopressin

**Lipids:**

| | |
|---|---|
| Cholesterol | from Synopharm (batch 0202A098) |
| STEL-PC | synthetic tetraether lipid of formula (2) |
| CDCA | chenodeoxycholic acid (sodium salt), SIGMA (Lot: 121 K1118); penetration enhancer; molecular weight $M_w$ = 412,8 g/mol |
| GCTE | glycerol-caldityl-tetraether, molecular weight $M_w$ = 1454 g/mol |
| DPPC | 1,2-dipalmitoyl-sn-glycero-3-phophatidylcholine from Lipoid (batch 583049-1/20) molecular weight $M_w$ = 733 g/mol |

**Other:**

| | |
|---|---|
| Water | |
| Acetic acid | from Sigma |
| Chloroform | HPLC grade from Merck |
| MeOH | HPLC grade from Merck |
| Zwittergent | 3-14 Sulfobetain from SIGMA |
| CF | 5-(and-6)-carboxyfluorescein mixed isomers from Molecular Probes |
| bile salt | sodium cholate |

1. General procedure for the preparation of liposomes:

1.1 Thin film method

A stock solution of STEL-PC is prepared by dissolving 2 μmol of STEL-PC in 1 ml of chloroform and methanol in a ratio of 2 : 1 (vol/vol).

A stock solution of cholesterol is prepared by dissolving 50 μmol of cholesterol in 1 ml of chloroform and methanol in a ratio of 2 : 1 (vol/vol).

A stock solution of CDCA is prepared by dissolving 2 μmol of CDCA in 1 ml of chloroform and methanol in a ratio of 2 : 1 (vol/vol).

The lipid mixtures were prepared with stock solutions of cholesterol, STEL-PC and CDCA in a round-bottomed flask (5 ml). The total lipid content was 6 μmol. The lipids were dissolved in a mixture of chloroform and methanol in a ratio of 8 : 1 (vol/vol) in order to maintain a homogeneous mixing of the lipids during evaporation of the solvent.

The solvents were removed under low pressure (30 mbar for 20 min) using a rotary evaporator at a bath temperature of 60 °C.

After complete removal of the organic solvents, the lipid mixture was hydrated with water. After sonification

and vortexing a liposomal suspension is obtained.

The MLV (multilamellar vesicles) suspension was extruded 21 times through porous PCTE-membranes (200 nm) using a hand-extruder (Avestin, Vancouver, Canada).

1.2 Addition of peptide and lyophilisation

A peptide stock solution of 10 mg/ml DDVAP in water was prepared and 50 μl of the stock solution were added to a volume of approx 500 μl of the extruded liposome suspension containing 6 μmol of the liposome in PP-vials (Eppendorf 1.5 ml).

The resulting peptide-liposome suspension was lyophilized in order to remove the water. For this purpose the suspension was frozen in liquid nitrogen and lyophilized at the parameters listed in table 1:

table 1: lyophilisation parameters

| parameter | temperature (°C) | pressure (mbar) | time (h) |
|---|---|---|---|
| freezing | - 196 | 1000 | 0.1 |
| main drying | -25 | 1 | 12 |
| final drying | +25 | 0.05 | 2 |

1.3 Rehydration

The peptide is protected against digestion in the GI-tract by the formation of closed liposomal spheres containing the peptide. After lyophilisation the liposomes are (partially) disrupted and full protection is achieved only if water is added leading to closed lamellar structures again.

After the lyophilisation the lipid-peptide mixture was rehydrated with buffer (50 mM acetate buffer pH 4.9) in a two step process.

In the first step the rehydration was done at a total lipid concentration of 0.6 μmol/μl. Complete rehydration was achieved by vortexing for periods of several seconds and subsequent visual control for an homogenous formation of the suspension.

In the second step the suspension was diluted by a factor of 20 with the buffer.

In order to separate the free peptide in the non-liposomal excess volume from the encapsulated peptide associated with the liposomes, the suspensions were centrifuged at 25.000 g for 20 min. The liposomes were collected in the pellet, while the free peptide remained in the supernatant. The volume ratio of the liposome-pellet and the clear supernatant was approximately 1:9. The pellet was separated from the supernatant by a sharp border.

The supernatant was separated and analyzed for peptide content by HPLC according to standard procedures known to person skilled in the art.

In order to characterize the peptide content the pellet was diluted with a solution of Zwittergent 40% (w/v) by a factor of 10. This leads to solubilisation of the liposomes and the content of peptide was analyzed by HPLC. The relative encapsulation efficiency is defined by the ratio of the amount of peptide in the pellet and the total amount of peptide:

$$rel.\ encaps.\ eff. = \frac{mSCP_{lip}}{mSCP_{lip} + mSCP_{free}}$$

2. Formulation stability: Assays

The SCP-formulation batch tested for stability was prepared with the lipid system STEL-PC /cholesterol / CDCA in different molar ratios.

2.1 Stabilty at low pH

A prerequisite of the intestinal delivery of compounds with liposomes is that the bulk of the compound is not already released at low pH of the stomach. The release of peptide at low pH is assayed by the following protocol:

The formulation was centrifuged at 25.000 g for 20 minutes, the pellet was resuspended in 1 ml 50 mM acetate

buffer pH 2 in a Eppendorf cup (pH 2 of the buffer was adjusted with HCl/NaOH). The formulation was incubated at room temperature under gentle shaking to prevent sedimentation of the liposomes. At various points of time aliquots of 200 µl were taken and centrifuged at 25.000 g for 20 minutes. The supernatant (free peptide) was separated and analyzed for peptide content by HPLC.

After sampling a 100 µl aliquot of the formulation was taken as reference. The reference was mixed with 100 µl of 40 % (w/v) Zwittergent solution for dissolving the liposomes, the SCP-concentration was measured by HPLC.
The release was calculated by

$$\%\ release = \frac{peptide_{supernatant}}{peptide_{reference}} * 100\ \%$$

2.2 Stability at pH 8 and 0.3 % (w/v) sodium cholate

Important for liposomal drug delivery in vivo is as well as the stability in the stomach under acidic conditions the behavior of the formulation at pH 8 and 0.3 wt.-% bile salt, which simulates the physiological conditions of the GI-tract.
The release of the peptide under these conditions is assayed by the following protocol:

The formulation was centrifuged at 25.000 g for 20 minutes, the pellet was resuspended in 0.9 ml 50 mM phosphate buffer pH 8 in a Eppendorf cup (pH 8 of the buffer was adjusted with HCl/NaOH). 100 µl of a 3 wt.-% sodium cholate solution was added, the final sodium-cholate-concentration was 0.3 % (w/v). The formulation was incubated at room temperature under gentle shaking to prevent sedimentation of the liposomes. At various points of time aliquots of 200 µl were taken and centrifuged at 25.000 g for 20 minutes. The supernatant (free peptide) was separated and analyzed for peptide content by HPLC.

After sampling a 100 µl aliquot of the formulation was taken as reference. The reference was mixed with 100 µl of 40 % (w/v) Zwittergent solution for dissolving the liposomes, the SCP-concentration was measured by HPLC.
The release was calculated by

$$\%\ release = \frac{peptide_{supernatant}}{peptide_{reference}} * 100\ \%$$

3. Results

3.1 STEL-PC containing liposomes

Cholesterol was used as a host lipid for the liposomal formulation of the synthetic tetraether lipid STEL-PC. To determine the optimal ratio between STEL-PC and host lipid, liposomes with a different ratio of STEL-PC to cholesterol were prepared. The ratio of STEL-PC in the liposomes which were tested *in vitro* varied from 0 to 100 mol%. After addition of detergent the stability of the liposomes were tested by measuring the release of carboxy fluorescein after 30 minutes.
Release of carboxy fluorescein was determined at 37 °C using a Fluoroskan Ascent® (Thermo Fischer Scientific, Waltham, USA) after injection of the liposomes in Tris buffer at pH 2. Increase of fluorescence was measured at 485 nm excitation and 520 nm emission wavelength.
As can be seen from Figure 2, cholesterol formed stable liposomes with a content of STEL-PC in a range of from 10 to 50 mol%. There is no formation of stable liposomes at a STEL-PC ratio from 0 to less than 10 mol% and from above 50 to 100 mol%.
For the following experiments liposomes are used with a ratio of STEL-PC to cholesterol of 1 : 2.5.

3.2 Addition of penetration enhancer

The oral uptake of the peptide is improved by adding a penetration enhancer to the liposomal formulation. In an *in vitro* test, small amounts of the penetration enhancer CDCA were added to STEL-PC - cholesterol liposomes with a composition of 1 : 2.5. To find the optimal ratio between STEL-PC, cholesterol and CDCA with regard to a good

encapsulation efficiency, the CDCA-ratio was varied from 0 to 7 mol% at pH 7 and from 0 to 23 mol% at pH 4.9.

The relative encapsulation efficiency of the peptide was measured by HPLC.

Figure 3 demonstrates that the encapsulation efficiency decreases with an increasing content of CDCA at pH 7. In contrast the encapsulation efficiency increases with an increasing content of CDCA at pH 4.9 (figure 4). This pH is lower than the $pK_s$-value of CDCA, which means that most of the CDCA molecules are protonated and an integral part of the liposomes.

3.3 Variation of rehydration volume

At the rehydration step of the liposome preparation, the lyophilisated mixture of liposomes and peptide is resuspended in buffer at pH 4.9. Figure 5 demonstrates the relative encapsulation efficiency in dependance of the rehydration volume.

The encapsulation efficiency decreases with increasing rehydration volume. This means, that the rehydration volume has to be as small as possible. For *in vitro* tests very small liposome batches are produced. The smallest manageable rehydration volume here is about 10 μl.

3.4 pH stability

To determine the stability of liposomes at acidic conditions, the release of peptide, which is encapsulated in liposomes, was measured at pH 2. The liposomes were composed of STEL-PC, cholesterol and CDCA in a ratio of 1 : 2.5 : 0.25.

Figure 6 demonstrates that 15% of the encapsulated peptide is lost during the first 20 minutes at pH 2. No further release of peptide is observed. The 15% loss of peptide can be explained by the breakup of peptide-CDCA aggregates bound to the outer shell of the liposomes. The encapsulated peptide is not released.

3.5 Variation of penetration enhancer

The release of peptide was also determined in dependence of the content of the penetration enhancer CDCA. The liposomes were composed of STEL-PC and cholesterol in a ratio of 1 : 2.5. The *in vitro* test was carried out at a pH of 8 and in the presence of 0.3 wt.-% bile salt. The CDCA ratio varied from 0 to 23 mol%.

Figure 7 and 8 demonstrate that the release of peptide increases with an increasing content of CDCA at pH 8. Release data were recorded 20 minutes after the addition of the bile salt.

Liposome preparations of the synthetic tetraether lipid STEL-PC with the host lipid cholesterol were carried out successfully. The optimal ratio between the tetraether lipid and the host lipid for formation of stable liposomes is near 1 : 2.5.

Furthermore, the penetration enhancer CDCA was incorporated into STEL-PC - cholesterol liposomes. The system STEL-PC - cholesterol - CDCA was optimized with respect to a good encapsulation efficiency of the peptide. Best results were obtained with a CDCA content of 23 mol% and a low hydration volume for the lyophilisated liposome - peptide mixture at pH 4.9.

The results of the *in vitro* tests for peptide release clearly demonstrate that STEL-PC liposomes are stable under acidic conditions (conditions which correspond to the acidic pH value in the stomach) and that the release of peptide at pH 8 in the presence of bile salt (conditions which correspond to the slightly basic pH value in the intestinum) increases with an increasing content of CDCA.

4. In vivo testing of liposomes in Brattleboro rats

Liposomes composed of STEL-PC and cholesterol in a ratio of 1 : 2.5 with DDVAP encapsulated as active agent were studied in the Brattleboro model.

Brattleboro rats are naturally developing Diabetes insidipus due to a lack of endogenous vasopressin and have a greatly enhanced water uptake and diuresis (Grant FD, Exp. Physiol. 2000, 85S, 203S-209S). Treatment with exogenous vasopression restores normal urinary function and exerts a temporal antidiuretic effect.

Brattleboro rats were hold singly in metabolic cages with free access to tap water. DDAVP was administered orally by gavage at a dose of 10 μg/kg body weight either as free compound or in various formulations. Urine excretion was measured over 24 h in 1 h intervals using a fraction collector.

As demonstrated in Figure 9, the oral intake of free DDAVP led to an inhibition of urine excretion for approximately 2 hours. Thereafter the antidiuretic effect vanished and a nearly constant urine excretion over the time was observed.

Formulation of DDAVP with STEL-PC/cholesterol did not influence the pharmacodynamic effect of DDAVP. In contrast, the co-administration of DDAVP with 10 or 100 mg/kg body weight of the penetration enhancer CDCA led to

a dose-dependent prolongation of the antidiuretic effect. The largest enhancement of the pharmacodynamic effect was obtained when DDAVP was formulated in STEL-PC/cholesterol liposomes containing CDCA in a final concentration of 5 mg/kg body weight.

Comparison of the pharmacodynamic (PD) effects of free and formulated DDAVP is illustrated in figure 10 which scales the magnitude of the PD effects as "free dose equivalent". One dose of DDAVP formulated with STEL-PC/cholesterol/CDCA is as effective as 20 doses of free DDAVP. Thus, the amount of DDAVP needed to exert a specific PD effect can be reduced by a factor of 20 which significantly lowers the cost of goods for an oral DDAVP preparation. In addition the amount of the penetration enhancer CDCA needed is clearly lower for the STEL-PC/cholesterol formulation compared to a simple co-administration of free DDAVP and CDCA which reduces the risk of potential side effects caused by CDCA.

## Claims

**1.** Liposome, comprising:

at least one tetraether lipid of formula (1) or a salt thereof,

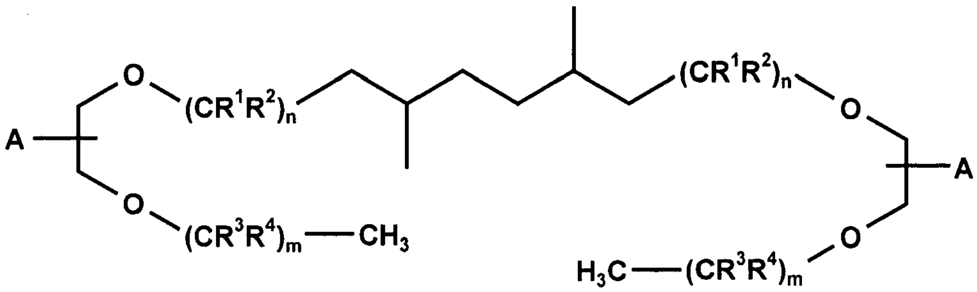

formula (1)

wherein n is an integer of from 11 to 15, preferably from 12 to 14;
m is an integer of from 13 to 17, preferably from 14 to 16;
$R^1$, $R^2$, $R^3$ and $R^4$ are independently selected from H or methyl; and
A is

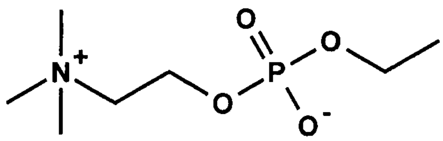

;

and
at least one sterol, wherein the molar ratio of tetraether lipid to sterol is from 1 : 1 to 1 : 10.

**2.** The liposome of claim 1, wherein the sterol is selected from cholesterol and derivatives thereof.

**3.** The liposome of claim 1 or 2, wherein the molar ratio of tetraether lipid to sterol is from 1 : 2 to 1 : 4, preferably 1 : 2.5.

**4.** The liposome of one of claims 1 to 3, wherein the tetraether lipid has the following formula (2)

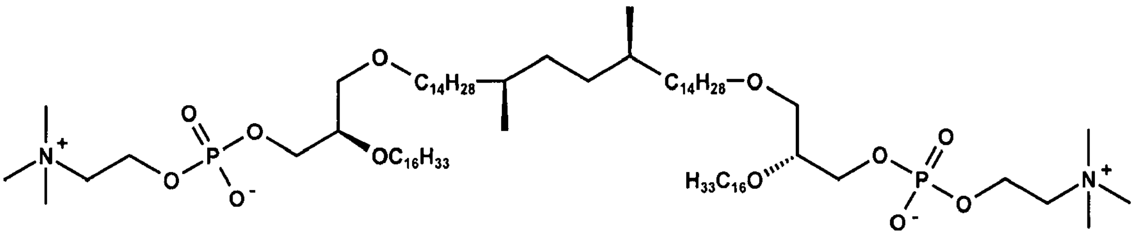

formula (2) .

5. The liposome of one of claims 1 to 4, further comprising an active agent.

6. The liposome of claim 5, wherein the active agent is selected from the group of peptides, preferably small cyclic peptides.

7. The liposome of claim 5 or 6, wherein the active agent is 1-desamino-8-D-arginine vasopressin.

8. The liposome of one of claims 1 to 7, further comprising a penetration enhancer.

9. The liposome of claim 8, wherein the penetration enhancer is selected from the group of bile acid derivatives, preferably chenodeoxycholic acid, the group of free fatty acids, preferably oleic acid, or a synthetic detergent, preferably polyoxyethylene(20)sorbitan monooleate, sorbitan monooleate, 2-(2-ethoxyethoxy)ethanol, or caprylocaproyl macrogol-8 glyceride.

10. The liposome of claim 8 or 9, wherein the molar ratio of penetration enhancer to liposome is from 0.05 : 1 to 0.35 : 1, preferably from 0.2 : 1 to 0.3 : 1.

11. The liposome of one of claims 1 to 10, comprising the tetraether lipid of formula (2), cholesterol and chenodeoxycholic acid, wherein the molar ratio of tetraether lipid : cholesterol : chenodeoxycholic acid is 1 : 2.5 : 1.

12. Pharmaceutical composition comprising the liposome of one of claims 1 to 11 and a pharmaceutically acceptable excipient.

13. The liposome of one of claims 1 to 11 for use as a medicament.

14. The liposome of one of claims 1 to 11 for use in treating nocturia, diabetes insidipus; dwarfism or small stature with partial or complete hGH deficiency, Ulrich Turner Syndrom, chronical renal insufficiency, Prader Willi Syndrom, idiopathic short stature; diabetes, small stature IGF1, severe IGF1 deficiency; osteoporosis; agromegaly, tall stature, gigantism; coagulation factors deficiency, Factor VII, VIII, IX, hemophilic disorders, treatment and prophylaxis of bleeding in patients with haemophilia A (congenital factor VIII deficiency), treatment and prophylaxis of bleeding in patients with haemophilia B (congenital factor IX deficiency), treatment of bleeding episodes in hemophilia A or B patients with inhibitors to Factor VIII or Factor IX and in patients with acquired hemophilia, prevention of bleeding in surgical interventions or invasive procedures in hemophilia A or B patients with inhibitors to Factor VIII or Factor IX and in patients with acquired hemophilia, treatment of bleeding episodes in patients with congenital FVII deficiency, prevention of bleeding in surgical interventions or invasive procedures in patients with congenital FVII deficiency; psoriasis, interleukine variants for chronic inflammatory disorders, atopic dermatitis, ulcerative colitis, allergies, or asthma.

15. Use of the liposome of one of claims 1 to 11 for the encapsulation of an active agent.

Figure 1

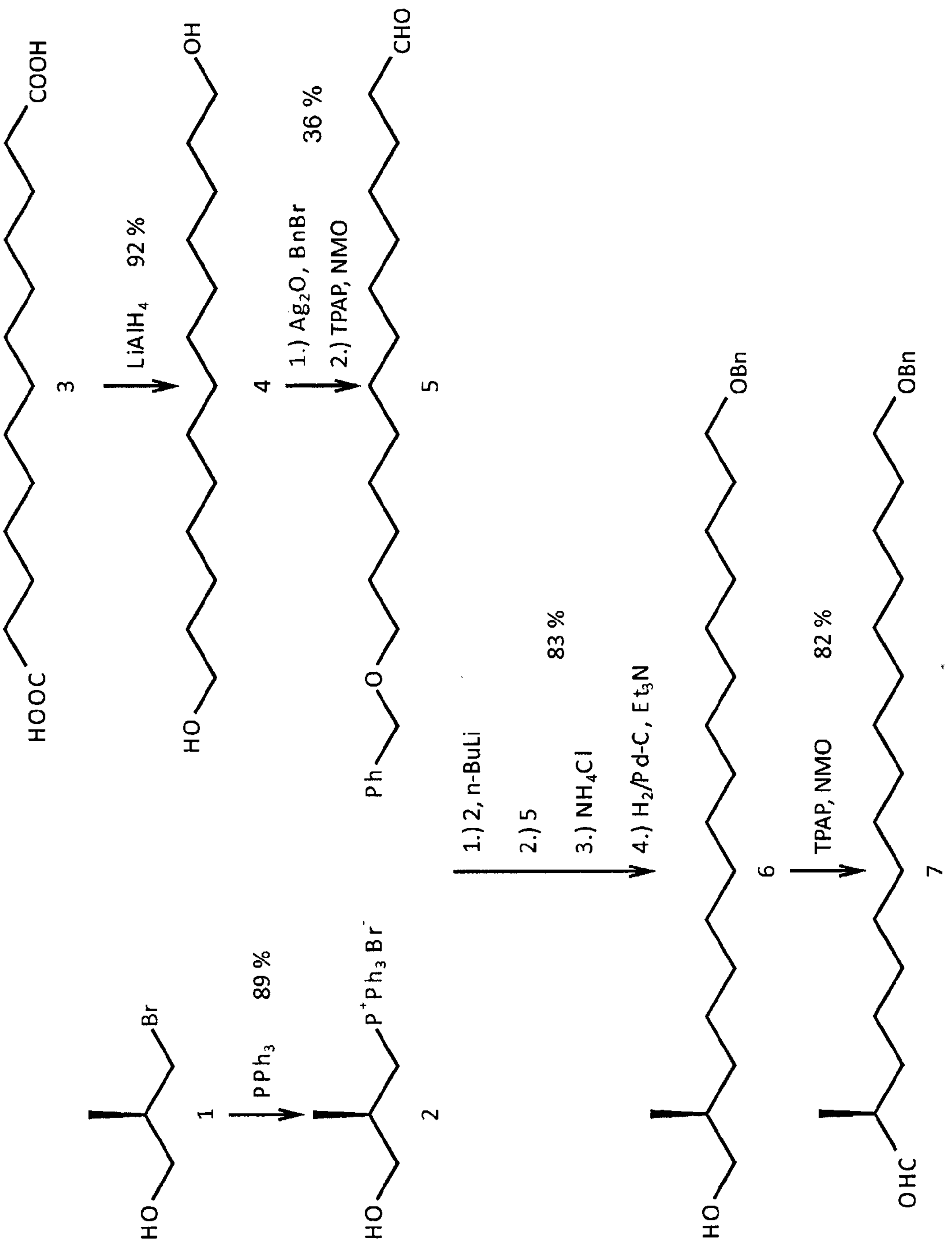
3
LiAlH$_4$ 92 %
4
1.) Ag$_2$O, BnBr
2.) TPAP, NMO
36 %
5
1
PPh$_3$
89 %
2
1.) 2, n-BuLi
2.) 5
3.) NH$_4$Cl
4.) H$_2$/Pd-C, Et$_3$N
83 %
6
TPAP, NMO
82 %
7

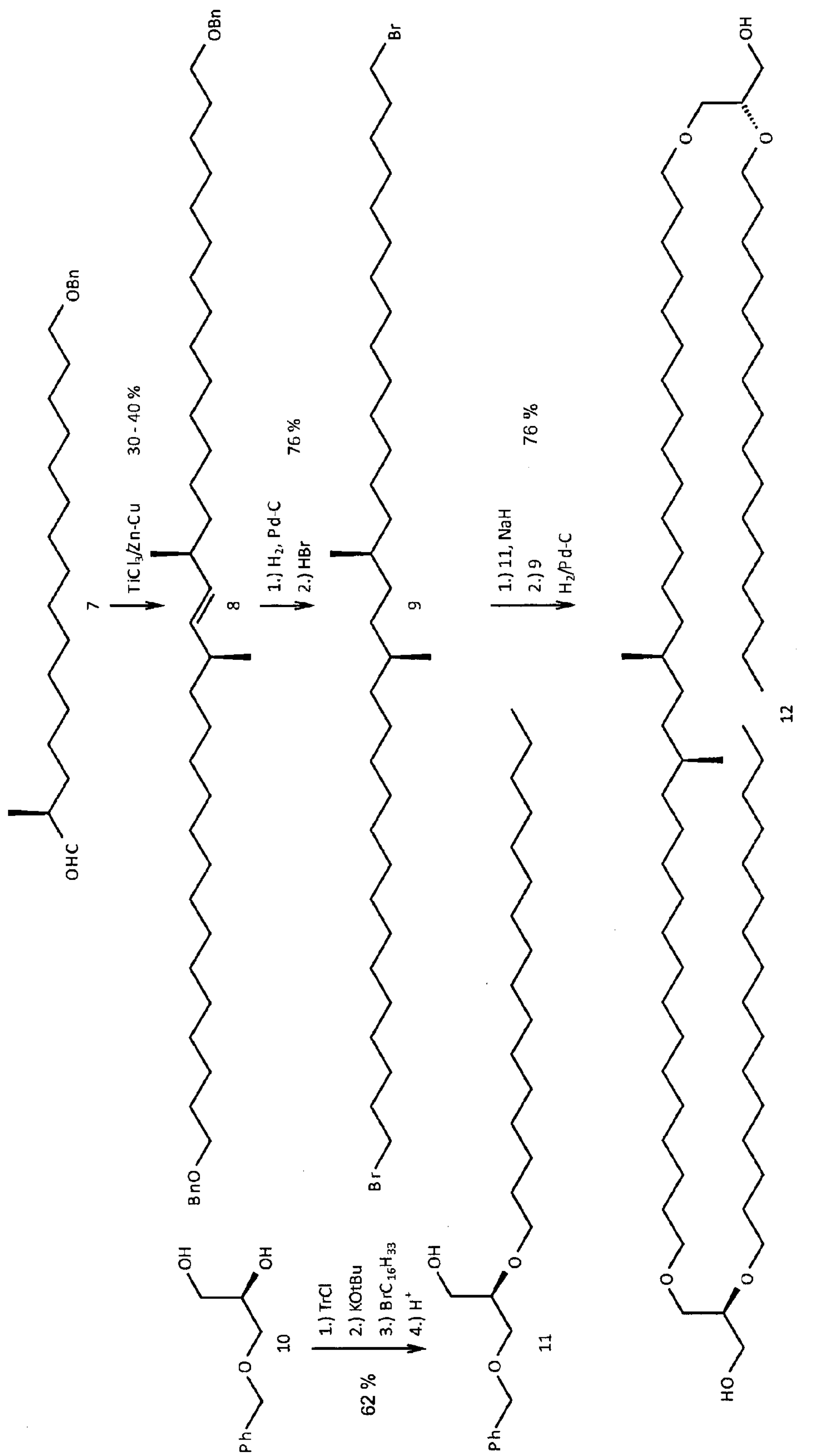
7
TiCl3/Zn-Cu
30 - 40 %
8
1.) H2, Pd-C
2.) HBr
76 %
9
1.) 11, NaH
2.) 9
H2/Pd-C
76 %
12
10
1.) TrCl
2.) KOtBu
3.) BrC16H33
4.) H+
62 %
11

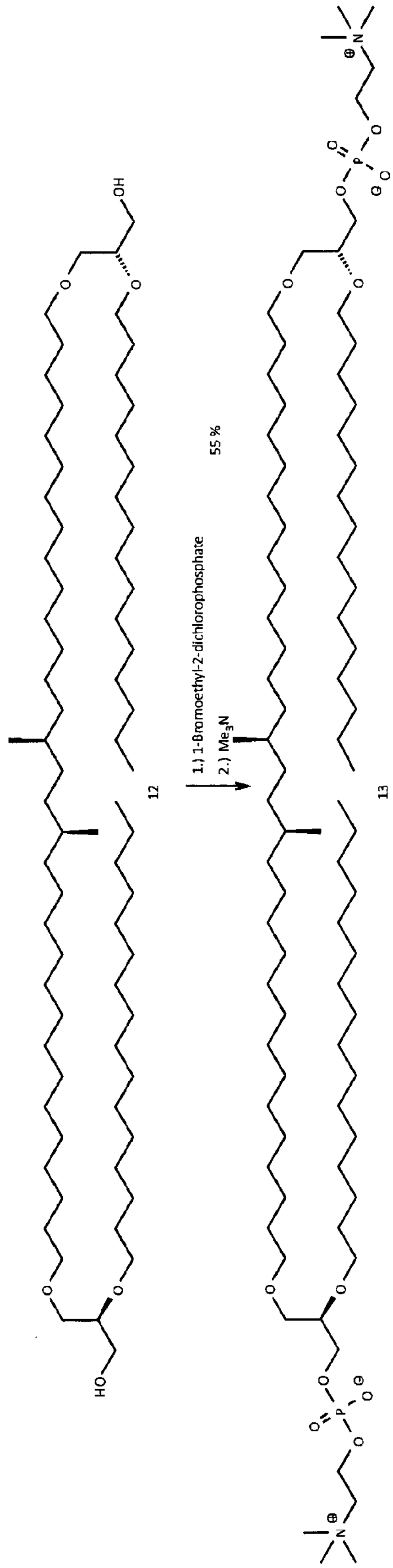


12

13

STEL-PC

Figure 2

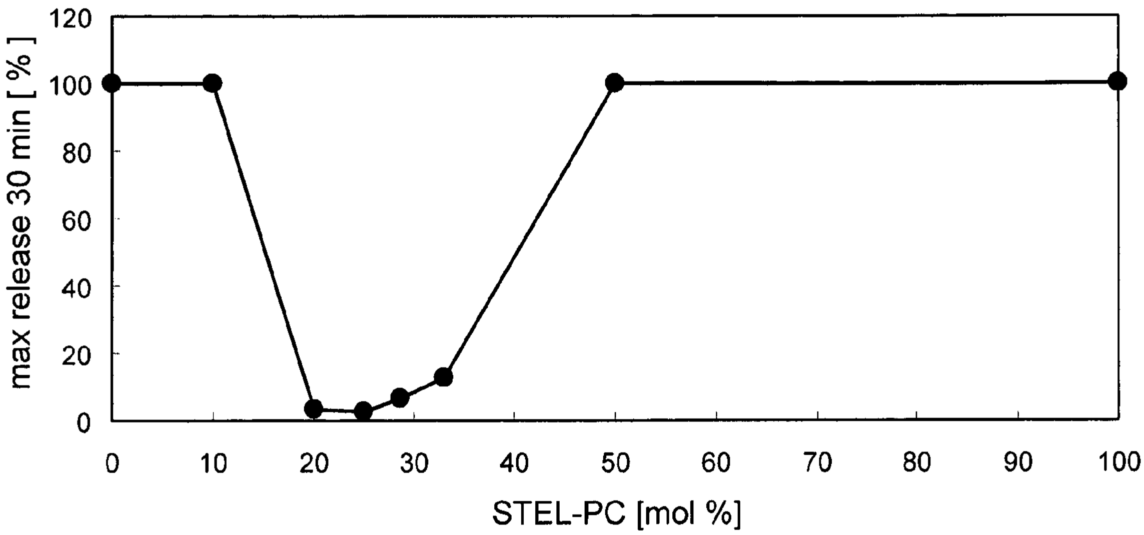


Figure 3

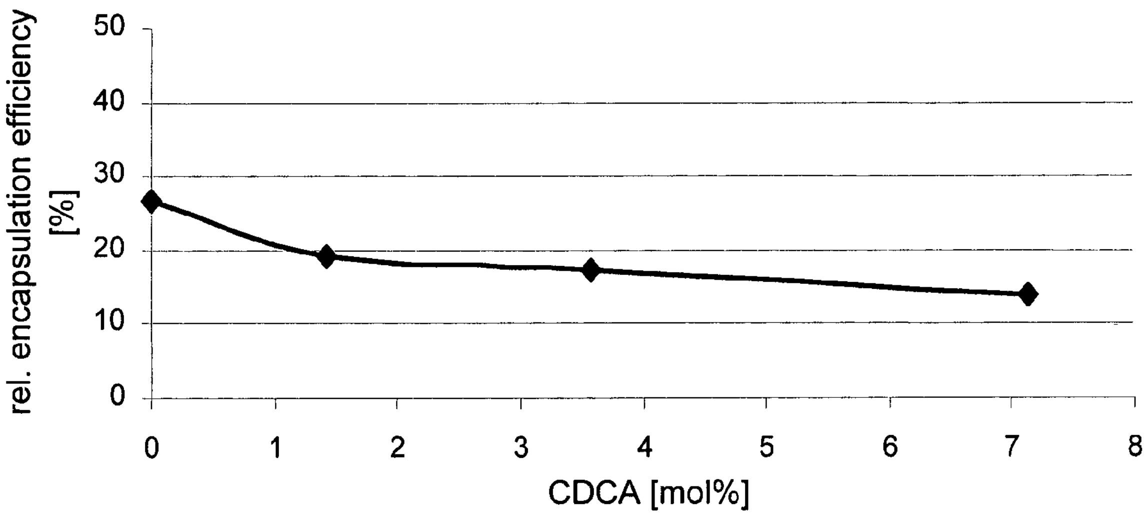

Figure 4

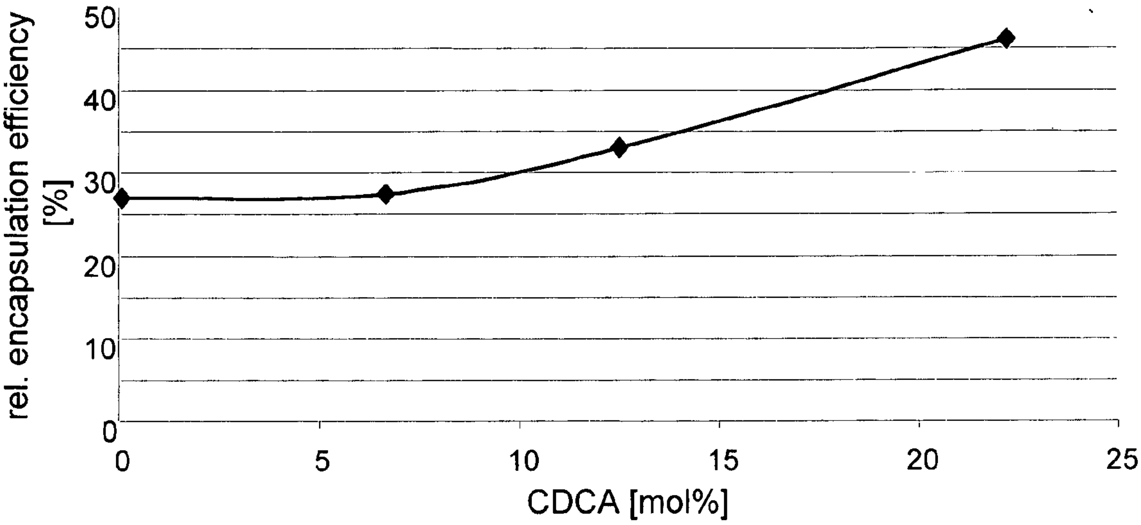


Figure 5

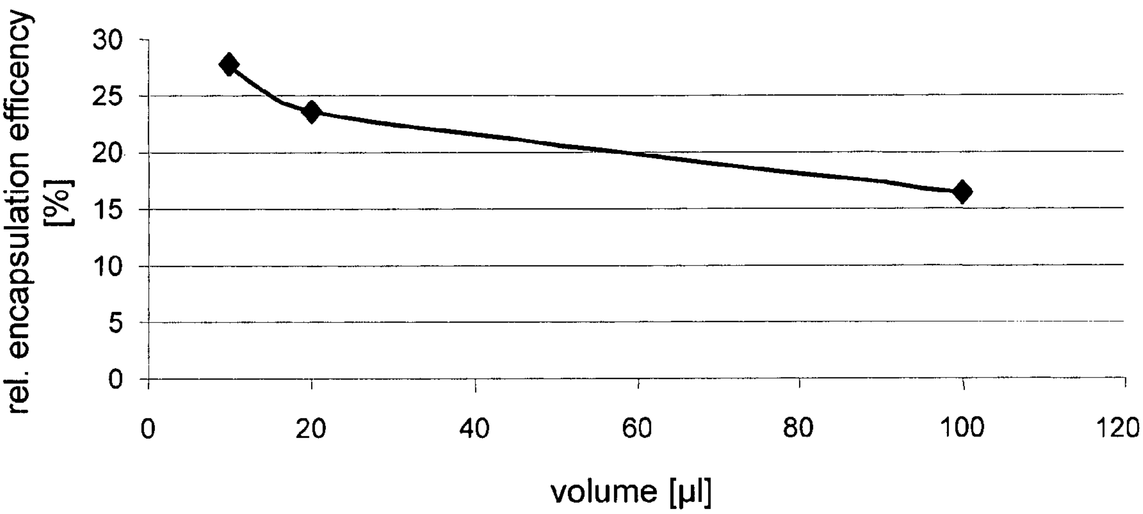

Figure 6

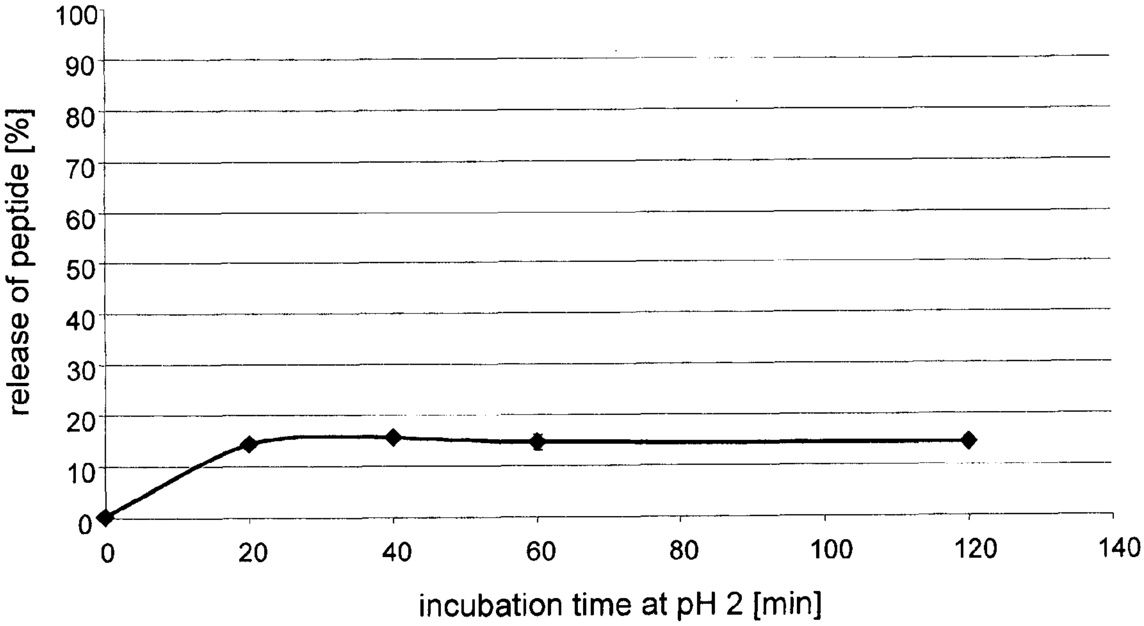


Figure 7

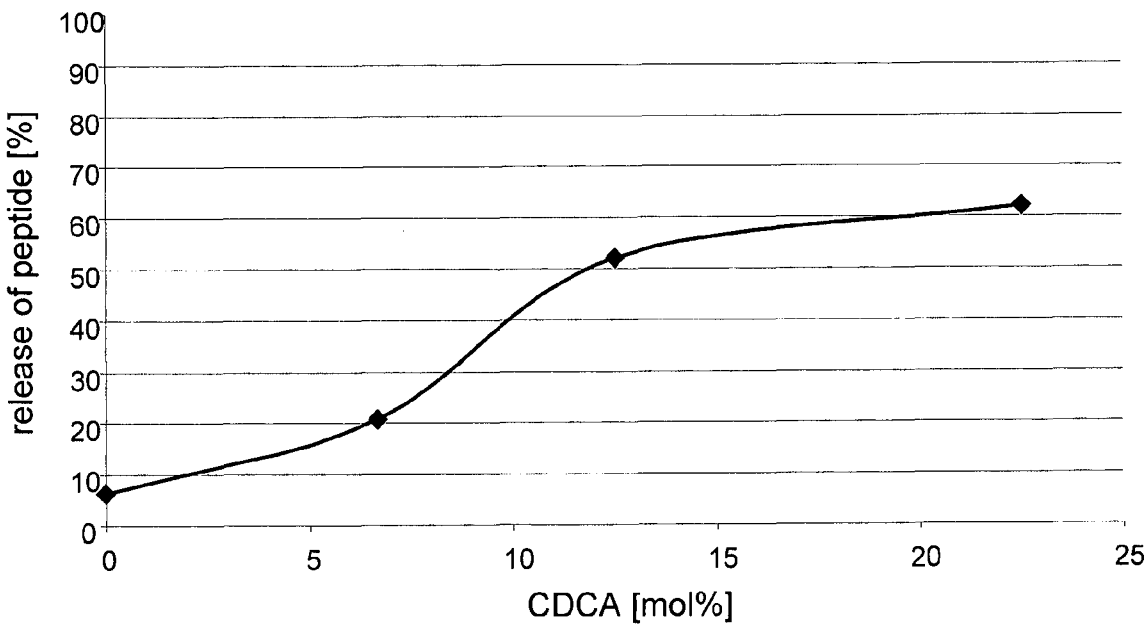

Figure 8

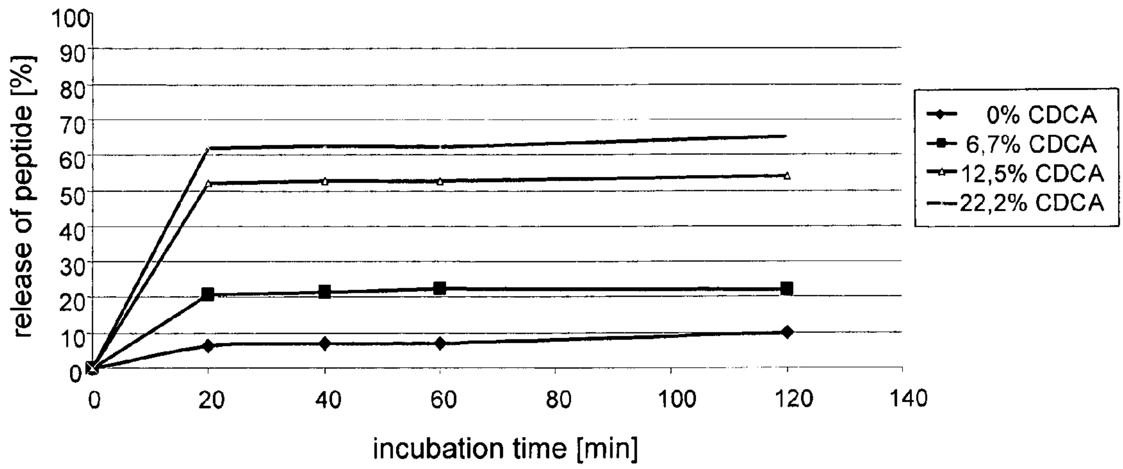


Figure 9

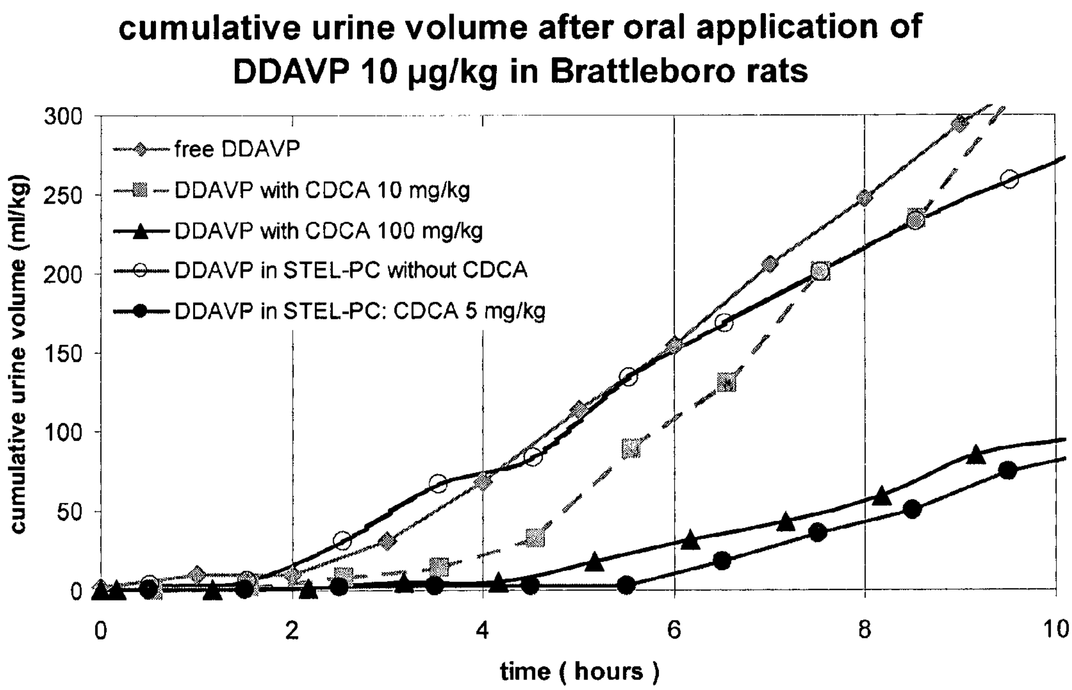

Figure 10

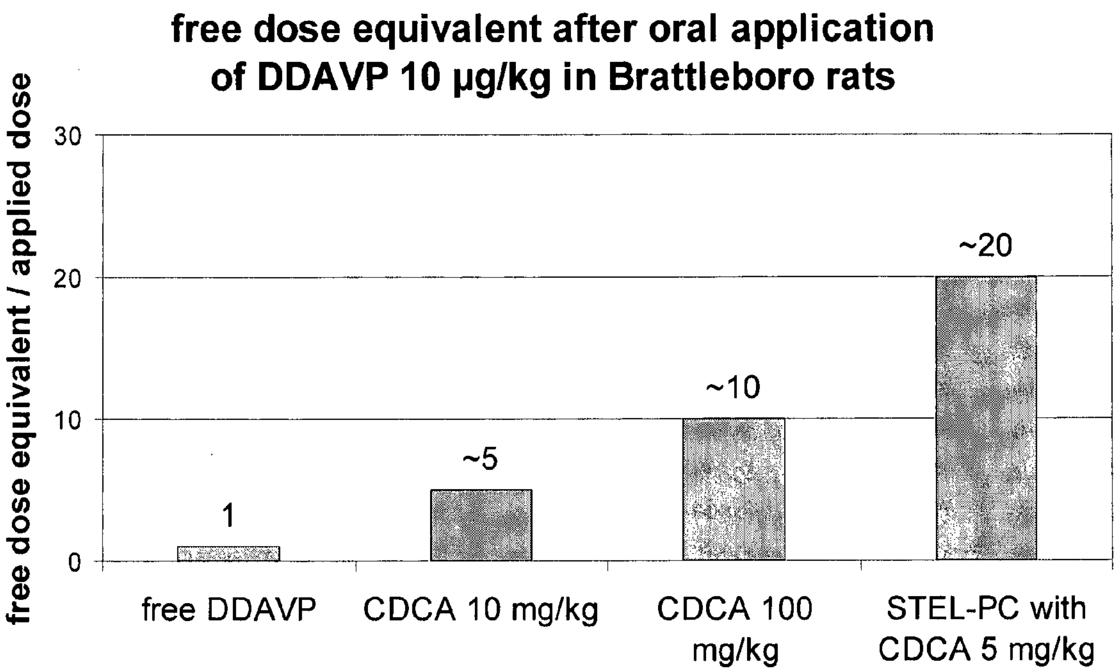
free dose equivalent after oral application
of DDAVP 10 µg/kg in Brattleboro rats
free dose equivalent / applied dose
30
20
10
0
1
~5
~10
~20
free DDAVP
CDCA 10 mg/kg
CDCA 100 mg/kg
STEL-PC with CDCA 5 mg/kg

Europäisches Patentamt
European Patent Office
Office européen des brevets

# EUROPEAN SEARCH REPORT

Application Number
EP 12 00 6604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2004/037223 A2 (BERNINA BIOSYSTEMS GMBH [DE]; RICHARDSEN HOLGER [DE]; TEWES BERNHARD [) 6 May 2004 (2004-05-06)<br>* page 8; compounds BB-21 *<br>* page 20 *<br>* page 21; claim 1 *<br>----- | 1-15 | INV.<br>C07F9/10<br>A61K9/127 |
| A,D | WO 03/064360 A1 (BERNINA BIOSYSTEMS GMBH [DE]; KUEHL CHRISTINE [DE]; LITTGER RALF [DE]) 7 August 2003 (2003-08-07)<br>* page 67; compound 18 *<br>----- | 1-15 | |
| A | THOMAS MARKOWSKI ET AL: "Synthesis of Optically Pure Diglycerol Tetraether Model Lipids with Non-Natural Branching Pattern",<br>EUROPEAN JOURNAL OF ORGANIC CHEMISTRY,<br>vol. 2011, no. 29,<br>1 October 2011 (2011-10-01), pages 5894-5904, XP055047072,<br>ISSN: 1434-193X, DOI: 10.1002/ejoc.201100758<br>* page 5895; figure 1; compounds I-III *<br>----- | 1-15 | TECHNICAL FIELDS SEARCHED (IPC)<br>C07F<br>A61K |
| A | WILMA FEBO-AYALA ET AL: "Functional Reconstitution of the Integral Membrane Enzyme, Isoprenylcysteine Carboxyl Methyltransferase, in Synthetic Bolalipid Membrane Vesicles +",<br>BIOCHEMISTRY,<br>vol. 45, no. 49,<br>1 December 2006 (2006-12-01), pages 14683-14694, XP055047078,<br>ISSN: 0006-2960, DOI: 10.1021/bi061159c<br>* page 14684; figure 1; compounds C20BAS, C32BAS, C32phytBAS *<br>-----<br>-/-- | 1-15 | |

The present search report has been drawn up for all claims

| Place of search | Date of completion of the search | Examiner |
|---|---|---|
| Munich | 13 December 2012 | Jeanjean, Fabien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 12 00 6604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WATARU SHINODA ET AL: "Molecular Dynamics Study of Bipolar Tetraether Lipid Membranes", BIOPHYSICAL JOURNAL, vol. 89, no. 5, 1 November 2005 (2005-11-01), pages 3195-3202, XP055047085, ISSN: 0006-3495, DOI: 10.1529/biophysj.105.060962 * page 3196; compounds a-TEPC, m-TEPC * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 13 December 2012 | Jeanjean, Fabien |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 00 6604

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2012

| Patent document cited in search report | Publication date | Patent family member(s) | Publication date |
|---|---|---|---|
| WO 2004037223 A2 | 06-05-2004 | AU 2003293621 A1 | 13-05-2004 |
| | | DE 10249401 A1 | 13-05-2004 |
| | | EP 1556005 A2 | 27-07-2005 |
| | | US 2006182792 A1 | 17-08-2006 |
| | | WO 2004037223 A2 | 06-05-2004 |
| WO 03064360 A1 | 07-08-2003 | EP 1509487 A1 | 02-03-2005 |
| | | WO 03064360 A1 | 07-08-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9910337 A
- WO 02053554 A
- WO 03064360 A
- WO 9731927 A
- DE 19607722 A
- US 5098588 A
- DE 19736592 A
- WO 2004037223 A


### Non-patent literature cited in the description


- **J. PARMENTIER et al.** *International Journal of Pharmaceutics,* 2011, vol. 405, 210-217